(19) **Europäisches Patentamt**

**European Patent Office**

**Office européen des brevets**

(11) **EP 1 443 697 A1**

(12) **EUROPEAN PATENT APPLICATION**

(43) Date of publication:
**04.08.2004 Bulletin 2004/32**

(51) Int Cl.⁷: **H04L 1/20**, H04L 1/00

(21) Application number: **03002172.9**

(22) Date of filing: **03.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **CoreOptics GmbH**
**90411 Nürnberg (DE)**

(72) Inventors:
• **Langenbach, Stefan**
**90411 Nürnberg (DE)**

• **Nebojsa, Stojanovic, Prof. Dr.**
**90411 Nürnberg (DE)**
• **Ulrich, Boecker**
**90411 Nürnberg (DE)**

(74) Representative: **Hellmich, Wolfgang, Dr.**
**c/o Grünecker, Kinkeldey, Stockmair & Schwanhäusser,**
**Maximilianstrasse 58**
**80538 München (DE)**

(54) **Error rate estimation method for a receiver and receiver apparatus**

(57)     This invention relates to a method for a receiver. The method comprises receiving a sequence of symbols. Further an unreliable detection event is determined, if the absolute value of a difference between a first metric for a first event minus a second metric for a second event is lower than a predetermined threshold. Moreover a receiver is provided, the receiver comprising a metric generator for generating a first and a second metric, and an unreliability detector for detecting an unreliable detection event.

FIG.1

**Description**

The present invention relates to a method and a receiver according to the preamble parts of claims 1 and 15, respectively. In particular the invention relates to the detection of an unreliable detection event (UDE) providing a basis for error rate estimation.

In digital receivers it is often necessary to continuously estimate receiver performance in terms of the "quality" of the detected digital output signal. The on-line estimation of receiver performance may be used to improve transmission quality, for instance by initiating the use of redundant transmission resources providing better transmission quality (e.g. channel switching in wireless applications).

Error rate and, more specifically, Bit Error Rate (BER), is universally accepted as a service oriented "quality" measure of performance of a digital transmission system. Sometimes, an errored-block rate (EBR) is used instead of BER, because the EBR is easier to measure. However, for practical purposes and for not-too-long block lengths, the difference between BER and EBR often becomes irrelevant, especially at high signal-to noise ratios (SNR), i.e. at very low BER, when most errors occur in isolation.

Determination of true error rate is clearly impossible without knowing the transmitted bit stream, so one must resort to error rate estimation.

Unfortunately, in order to minimize error rate, measurements of physical signal parameters that are directly related to the controllable receiver parameters, like received signal strength, power, etc., are often insufficient for control, because the dependence of the error rate on these parameters is unknown, especially for heavily distorted signals which are processed by non-linear processing functions, as is the case e.g. in a maximum-likelihood sequence detector (MLSD).

Measuring physical signal parameters, such as received signal strength provides only a very crude measure of overall system performance in particular the error rate. Hence such measured signal parameters are hardly suitable to optimize receiver parameters for minimum error rate. Only in some simple applications, such "local" performance optimization is possible, e.g. when adapting sampling phase towards maximized eye opening in a transmission system with hard-decision detection and with a channel without significant inter-symbol-interference (ISI). But typically such optimizations do not work under harder conditions, e.g. when severe ISI occurs or when a more complex detector is used.

In a digital communication system symbols are transmitted and typically a number of $2^n$ symbols are used. In the binary case (n=1), there are two different symbols, designated logic 0 (zero) and logic 1 (one).

In a well-known approach, bit error rate (BER) estimation is accomplished with the help of a Forward Error Correction (FEC) decoder, e.g. by counting the number of corrected bit positions. However, this **FEC based estimation** does not work well when FEC decoder errors are dominant i.e. at very low SNR. Another drawback is that the method requires a long feedback path from a downstream FEC decoder, which may be designated receiver back-end, to the receiver front-end, typically comprising demodulator and detector. Yet in some applications no FEC decoder may be present, or a framing-agnostic and FEC-agnostic method of estimation may be used instead. The latter may be the case when the FEC decoder is administratively separated from the front-end i. e. when the front end is a stand-alone product, and hence the receiver back-end may not provide the necessary BER estimation feedback. E.g. the FEC decoder may be located in a host system's digital receiver back-end of a separately marketable dense wave division multiplexer (DWDM) transponder module that comprises a optical-to-electrical (O/E) and an analog-to-digital (A/D) conversion and a symbol detector, but no FEC decoder.

In another conventional embodiment, the detected or decoded bit stream is compared with a known periodically repeated transmission sequence, i.e. a **training-based estimation** is carried out. This method has the disadvantage of training sequence overhead, which causes a rate increase, which in turn is extremely undesired in case of bandwidth-limited optical transmission systems, such as DWDM systems. Moreover the method requires knowledge of data formats.

Both FEC based methods and training-sequence-based methods require a framing process and do not work on un-synchronized bit streams.

In a **metrics-based estimation** approach, decision information in a Viterbi decoder or detector, which will be explained below, is used for providing a basis of a BER estimation.

US 5,944,844, "Method for determining connection quality in a receiver utilizing a Viterbi Decoder". This invention uses accumulated path metric differences, i. e. the sum of decision variables and the minimum of decision variables along the decoded path in the VA (Viterbi algorithm) to estimate BER. A drawback of this method is an increase of complexity since decision variables need to be stored until the trace-back step is completed and since accumulation of decision variable introduces complexity due to a floating-point format. Apart from the disclosure to compare estimates with predetermined threshold values the US 5,944,844 fails to expose a practical mapping from the measured observable to a BER estimate.

US 6,141,388, "Received signal quality determination method and systems for convolutionally encoded communications channels". Unlike the method of US 5,944,844, rather than using decision variables accumulated along the decoded path, this invention uses only the final decision metric in a decoded frame. This final decision metric is then mapped to a BER estimate. The method is described only in connection with convolutionally encoded data streams and frame decoding. Again, there is no disclosure how to map the measured decision metrics to a BER estimate.

A. J. Viterbi proposed in "Error Bounds for Convolutional Codes and an Asymptotically Optimum Decoding Algorithm" (IEEE Trans. Inf. Theory, IT-13, pages 260 to 269, April 1967) a decoding algorithm for convolutional codes, which has since become known as the **Viterbi algorithm**. Later on it was recognized that it was in fact a maximum-likelihood decoding algorithm for convolutional codes (confer Shu Lin, Daniel J. Costello Jr., "Error Control Coding: Fundamentals and Applications" Prentice-Hall, Inc., Englewood Cliffs, New Jersey 07632, 1983).

The Viterbi algorithm may also be used for channel equalization in order to cope with ISI. On a binary ISI channel, at a channel memory of m bits, there are $2^m$ states corresponding to all possible bit sequences of length m and 2 transitions entering and leaving each state, i.e. there are $2^{m+1}$ transitions between successive stages or time units in the trellis.

In an initializing step of the Viterbi algorithm beginning at an initial stage a path metric for a single path entering each state at the initial stage is computed. Each transition between states corresponds to a symbol. The path and its path metric is stored for each state.

The Viterbi algorithm further comprises a repeating step. In the repeating step the path metric for all the paths entering a state at a stage is computed by adding the branch metric entering that state to the metric of the connecting survivor at the state of the preceding stage. For each state the path with the largest path metric, called survivor path, is stored together with its path metric, and all other paths are eliminated.

A log-likelihood function log P(r|v) is called the metric associated with the path v and is denoted M(r|v). The different metrics depend on the properties of the transmission path. They may be obtained from noise measurements. The metrics may be assumed to be time invariant and listed in a look-up table for each transition from one state to another for a special application, or it may be obtained from on-line measurements (cf. EP 1 139 619 A1 "Channel estimation using a probability mapping table").

In a **truncation mode Viterbi detector,** path memories are truncated after D symbols and a decision is enforced on transitions to the states that are leaving the "window" of D+1 trellis stages. More specifically, such a detector has a path memory that contains D+1 trellis stages resulting in D transitions. When computing survivors from time t+1, a decision on the detector output is forced for a specific transition from a state at time instant t-D to a state at time instant t-D+1. As usual, in a practical implementation the states on this selected transition could be the trace-back states on the best path at time t, or they could be traced back from any state at time t.

A Viterbi detector operating in block-mode **(block-mode VA)** detects bits in a block i.e. a trellis segment by finding the best path between two previously determined states at the block boundaries. For the purpose of this invention, it is immaterial which detailed method is used to determine the states at the block boundaries.

For highest throughput applications like high-speed optical communication systems operating at data rates e. g. at 10 Gbps or 40 Gbps or above, it is essential that the error rate estimator can be implemented with very low additional complexity.

It is the object of this invention to provide a method and a receiver using another observable which does not require extensive calculations and/or additional circuitry.

This object is achieved by the subject matter of the independent claims.

Preferred embodiments of the invention are the subject matter of the dependent claims.

This invention advantageously does not require a framing process and can operate on non-synchronized bit streams, unlike both the FEC-based methods and the training-sequence-based methods. So the present invention does not require a FEC code nor a known training sequence for error rate estimation.

Advantageously the same principle can be applied for symbol detectors, maximum-likelihood-sequence detectors, truncation mode sequence detectors, block processing sequence detectors, and frame decoders for trellis encoded frames. This means that this invention can be applied to all detectors and decoders where a random decision can be identified.

In the binary case i.e. if only two symbols designated logic 0 and logic 1 are sent and detected on the receiver side the unreliable detection event can be determined by checking as to whether the analog voltage is within a range around the threshold which is used for discriminating logic 0 and logic 1. The latter step is a kind of an analog-to-digital conversion.

As a further advantage, the additional condition may be used that a decision must be a relevant random decision, i.e. a random decision where a wrong decision necessarily leads to a bit error. This additional condition ensures that only events are considered which are related to the bit error rate, by definition.

The advantage of considering more than one unreliable detection events by different thresholds for the absolute value of the metric difference between survivor and competitor generates more observables for the error rate e.g. the unreliable detection events obtained by using a lower threshold may be allowed for in the case of lower bit error rates and vice versa.

The condition that two metrics are equal in case that the metrics are represented by digital values can be verified by a single operation in most processors after the metrics have been loaded into appropriate registers. This illustrates that dedicated logic for checking the equality of two registers requires only a small amount of dedicated circuitry.

Counting unreliable detection events during a fixed period of time and reading the counter value thereafter results in a value which is proportional to the frequency of the unreliable detection events, which in turn is related to a bit error rate approximately by simple equation (8).

The adaptation of the period of time for counting the unreliable detection events to the frequency of the unreliable detection events may ensure quick adaptation of the receiver parameters in order to minimize the bit error rate and to ensure a sufficiently small uncertainty in the frequency of detection events.

If the counter value is considered to be too small i. e. lower than a first threshold, the counter value is preferrably not reset, such that the current measurement period is extended and accumulated values are not discarded..

The setting of demodulator parameters in order to minimize the unreliable detection event frequency and thereby the bit error rate keeps the bit error rate at an optimum even if the channel properties change in time.

In the following preferred embodiments of this invention are described referring to the accompanying drawings. In the drawings:

Fig. 1 shows an optical transmission system,

Fig. 2 illustrates the unreliable detection event for binary symbols; and

Fig. 3 and Fig. 4 show simulation results.

| Abbreviations: | |
|---|---|
| A/D: analog-to-digital | ADC: analog-to-digital converter |
| AGC: automatic gain control<br>AWGN: additive white Gaussian noise<br>BER: bit error rate<br>DWDM: dense wave division<br>multiplexer<br>EBR: errored-block rate<br>FEC: forward error correction<br>ISI: inter-symbol interference | MLSD: maximum-likelihood sequence<br>detection<br>O/E: optical-to-electrical<br>PDF: probability density function<br>PMD: polarization mode dispersion<br>RDE: reliable detection event<br>SNR: signal-to-noise ratio<br>UDE: unreliable detection event<br>VA: Viterbi algorithm |

An embodiment comprises a low-complexity error rate estimation method based on information that is readily available in a Maximum-Likelihood-Sequence-Detector (MLSD). It is especially useful for a local error-rate-based control loop within a digital receiver front-end (demodulator and detector).

More specifically, detection performance of a MLSD receiver, in terms of minimizing post-detection error rate is optimized, by providing a low-complexity post-detection error rate estimate to a receiver control facility for unframed data streams.

To this end "unreliable detection events" (UDE) are detected, counted, optionally processed, and then used to estimate error rate.

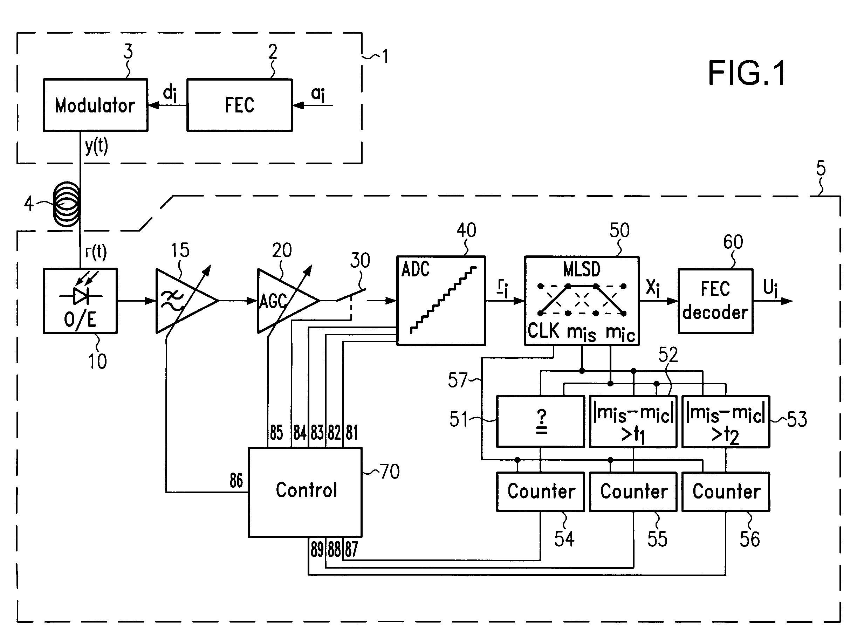

Fig. 1 shows an optical transmission system. It comprises a transmitter 1, and optical link 4 and a receiver 5. A typical transmitter 1 comprises an FEC encoder 2 for encoding input data $a_i$ in order to generate data $d_i$. This data $d_i$ is forwarded to a modulator 3. The modulator 3 generates an optical signal y(t) constituting the output of transmitter 1.

The optical signal is transmitted via optical link to receiver 5. The optical link comprises optical fibers which attenuate the optical signal and in addition constitute a dispersive channel. In order to compensate for the attenuation the optical link may comprise optical amplifiers which add noise to the optical signal. In state of the art dense wave division multiplexer (DWDM) systems the optical signal suffers from severe signal distortions that are caused by chromatic dispersion or group velocity dispersion, polarization mode dispersion (PMD), self-phase-modulation, inter-symbol interference (ISI) caused by the receiver itself, and other signal distortions that can beneficially be removed or counteracted by means of a MLSD.

At the receiver side of the optical link the optical signal r(t) is input into receiver 5. Receiver 5 comprises physical interface 10 which performs an O/E conversion. The analog electrical signal may be directly input into automatic gain control (AGC) circuit 20. Both, the physical interface 10 and AGC circuit 20 comprise an upper cut-off frequency. Both cut-off frequencies must be higher than $1/(2T)$, T being the symbol period. On the other hand too much excess bandwidth in excess over the required minimum picks up more noise from the optical link 4, which degrades the receiver performance by increasing the bit error rate. In typical receiver designs an excess bandwidth of 50% to 100% is therefore provided (S. U. H. Qureshi, "Adaptive equalization", Proc. IEEE, Vol. 73, 1985, pp. 1349-1387).

In practice due to the design complexity of low pass filtering in the GHz range, often only implicit low pass filtering is performed in the receiver, by virtue of given component bandwidth limitations. However, in order to obtain a more precise control of the bandwidth, another embodiment may comprise an adjustable low pass filter 15 between physical interface 10 and AGC circuit 20. The low pass filter 15, especially its cut-off frequency, is controlled by output 86 of control unit 70 in order to minimize the bit error rate.

The AGC circuit 20 may amplify the analog electrical signal output either by physical interface 10 or low pass filter 15 to a constant level in terms of average rectified voltage or root-mean-square voltage. In another embodiment the amplification of AGC circuit 20 may be controlled by control unit 70, output 85 based on digitized values $r_i$ (cf. US 3,931,584).

The sampling phase of A/D converter (ADC) 40 may be controlled by a sample-and-hold circuit 30 illustrated by a switch in Fig. 1. The sample-and-hold circuit 30 is controlled by output 84 of control unit 70. The ADC 40 performs a three-bit conversion and outputs digital data $r_i$. Various parameters of the ADC 40 may be controlled by control unit 70. Therefor outputs 81 to 83 of control unit 70 are provided. Output 81 may control the offset of ADC 40, output 82 may provide a reference voltage which controls the amplification of the A/D conversion i. e. the spacing of the thresholds and output 83 may control the non-linearity of the ADC 40.

In other embodiments an N-bit conversion may be performed by the ADC 40, wherein N is an integral positive number.

The digitization of the analog signal output by AGC circuit 20 may be performed at the symbol rate of $1/T$. In another embodiment n-fold over-sampling may be performed i.e. the analog voltage output by AGC circuit 20 is sampled at a rate of $1/(nT)$. The sampling rate is controlled by control unit 70, which controls the sample and hold circuit 30 and the digitization of ADC 40. In high-speed applications n is often chosen to be 2 since higher values of n are not feasible due to component restrictions. In the case of n=2 the rising and falling clock edges can be used to trigger sampling based on a recovered symbol clock. The symbol $r_i$ output by ADC 40 is input into MLSD 50 which may be implemented by a Viterbi decoder. More specifically the Viterbi decoder may be of a truncation mode type or a block mode type. As explained above a Viterbi decoder determines the most likely path, designated survivor, on the basis of metrics. The metric of the most likely path is output at output $m_{is}$ of MLSD 50. The metric of the best competitor path is output at output $m_{ic}$ of MLSD 50.

In the case of a Truncation Mode Viterbi Detector a UDE is declared if the survivor decision at time t-D was a random decision. The only addition to the standard Viterbi detector is an additional memory containing the information about path metric equality, one bit per stage and state. This memory is required due to the delay of D steps between detecting path memory equality and using that decision.

In another embodiment a UDE can also be defined and detected if a VA is run to determine a most likely state at a particular stage of the trellis, starting from identical zero path metrics. A UDE may only be declared if this best state selection is subsequently used for detection, i.e. when it is relevant.

In some trellises estimation of bit error rate can be improved if a UDE is declared not for arbitrary path metric equalities, but only for path metric equalities between the best path that detects a one on a specific transition and the best path that detects a zero on that specific transition.

MLSD 50 outputs the detected symbols of the most likely path $X_i$ to FEC decoder 60. The FEC decoder 60 finally outputs data $U_i$. In one embodiment the FEC decoder 60 is designed to work with a relatively high input BER of e.g. $10^{-4}$ and still provide a very low output BER of e.g. $10^{-15}$. This situation is common in modern optical high-speed systems such as DWDM systems employing so-called advanced FEC.

Unreliable detection events may be declared if the metrics of the survivor and competitor path are equal which is detected in comparator 51. A second kind of UDE may be declared if the absolute value of the difference between the metrics of the survivor and competitor paths are lower than a threshold t. This condition is checked in comparators 52 and 53 for two thresholds $t_1$ and $t_2$. There are embodiments of this invention that comprise only comparator 51 or comparator 52. Other embodiments comprise both comparators 51 and 52. In further embodiments more than two comparators 52 and 53 may be provided with or without comparator 51, wherein each of the comparators 52 and 53 checks for a different threshold t.

MLSD 50 provides a decision clock on line 57 to counters 54, 55 and 56. The decision clock comprises a pulse each time a decision is to be evaluated. In the case of truncation mode Viterbi detection, the MLSD generates a decision clock pulse each time a decision is enforced after D+1 trellis stages. In the case of block mode Viterbi detection, a decision clock pulse is generated each time a block of data is detected. Each of the counters is enabled by the decision clock on line 57 and is incremented if the respective comparator has detected an UDE. The counters are read from time to time by control unit 70 via lines 87 to 89 and reset if decided by control 70. The counter values are proportional to the frequencies of unreliable detection events that are evaluated in control unit 70. The control unit 70 may read and reset the counters after a fixed counting period. This period may be different for each counter.

In another embodiment the counting period of each counter may be adapted to the frequency of UDE. To this end two thresholds may be provided for each counter.

If the counter value is lower than the first threshold, the counting period is considered to be too short. Consequently the counting period is increased and the counter may be reset. Alternatively the counter value is not reset and counting is continued for the difference between the old and the new counting period before the counter value is read out again and compared to the two thresholds. In high frequency applications, the operations of reading out the counter value, comparing it to two thresholds, calculating a new counting period and the difference between new and old counting periods can not be completed within one detection clock cycle. Consequently one ore more UDEs may be detected and counted meanwhile. In order to avoid incorrect measurements the counter may be disabled until the new counting period is determined.

If the read out counter value is greater or equal to the first threshold and smaller or equal to the second threshold, the counter value is considered to be in the right range and the counting period remains unchanged. After reading and processing the counter value the respective counter is reset.

It the counter value is greater than the second threshold the counter value is considered to be too great and consequently the counting period is decreased. After reading and processing the counter value the respective counter is reset.

In order to avoid too many changes of the counting periods and the computational effort associated herewith, the counting periods may be kept constant for a predetermined number of counting periods. The latter additional rule may only be applied after the first time after power up or reset the counting period is within the first and second thresholds i. e. has reached the target range.

The control unit 70 may average or smooth read out counter values or the frequencies of UDEs obtained therefrom. The control unit can obtain BER estimates from the UDE frequencies or counter values by equation (8), which will be explained below.

The control unit 70 may perform a gradient search over the estimated error rate in order to set one or more receiver parameters in order to arrive at an error rate as low as possible. More specifically, in the absence of "locally" measurable "physical" quality indicators, steepest-descent minimization of estimated error rate can be used to optimize such parameter settings, at least when the error rate has a convex functional dependency on the parameter(s) in question, i.e. where a unique globally minimal error rate exists over the relevant parameter space. Error rate optimization is especially beneficial if channel parameters e.g. properties of optical fiber 4 or physical interface 10, often comprising a photo diode, change gradually. In other embodiments the control unit may perform the gradient search on one or more UDE frequencies or counter values. Moreover the control unit 70 may set the gain of the automatic gain control circuit 20 via output 85. A further receiver parameter is the cut-off frequency of low-pass filter 15 which can be set via output 86 of control unit 70. Further the control unit 70 can control the sampling times by sample-and-hold circuit 30 via line 84. Then the control unit influences the thresholds of the ADC 40 via outputs 81 to 83.

Skilled persons will understand that not all circuit parts may be present in receivers according to this invention. Controlling the sampling phase in sample and hold circuit 30 is especially beneficial in receivers that do not perform over-sampling.

If a high order low-pass filter is used for low-pass filter 15 the high order low-pass filter generates additional inter-symbol interference, which can be handled by the MLSD 50. There is a performance trade-off between noise reduction and increased ISI, which varies with channel parameters. The control unit 70 can adjust the receiver parameters to gradually changing channel parameters by a gradient search over e.g. estimated error rate as explained above.

In the following the concept of unreliable detection events will be explained in more detail.

A relevant decision is a decision made in the detector, which is part of a receiver, such that a wrong decision *necessarily* leads to one or more errors in the detected output symbol stream. For instance, in a Viterbi Detector, selecting the wrong incoming branch as a survivor at some state in the trellis is not a relevant decision if the selected branch eventually is not on the survivor. Since the MLSD 50 outputs a decision clock at line 57 indicating a final decision on the path all decisions taken by comparators 51, 52 and 53 are relevant decisions.

A decision is called a random decision if it is made without sufficient information which alternative is more likely to be correct than the other(s). A strict random decision is a random decision under total indifference amongst alternative(s), e.g. when a decision is made in a Viterbi detector between two alternative paths with exactly identical metrics. This means that decisions detected by comparator 51 are strict random decisions.

A wide-sense random decision is a random decision under *approximate* indifference amongst alternative(s), e.g. when a decision is made in a Viterbi detector between two alternative paths with an absolute path metric difference that is smaller than some small, predetermined threshold value. Consequently comparators 52 and 53 detect wide-sense random decisions.

In this patent, an Unreliable Detection Event (UDE) can be defined as an event that fulfills one or more of the following conditions:

- The event occurs in a detector that is part of a receiver.

- The detector makes a random decision.

- The random decision is a relevant decision, i.e. it affects the detected output symbol stream.
  The events detected in comparators 51, 52 and 53 fulfill all of the three conditions above.
  Instead of an exact theoretical derivation of the relationship between the UDE frequency and BER or EBR two simplified cases are considered.
  The first scenario is "artificial" and only motivates, why observing the frequency of unreliable detection event can give information about the true error rate, in a idealized setting. The results of this scenario apply to both, Symbol or Sequence Detection.

A hypothetical binary "genie" receiver R with the following properties is considered:

Receiver R decides either completely reliable i. e. error-free or completely unreliable i. e. at random, for a symbol or for a sequence e. g. a block, and R also knows perfectly when an unreliable detection event has occurred because it provides perfect reliability information.
It is assumed that

- the probability of the event UDE to detect unreliably is $P_{ud}$

- The probability of the reliable detection event (RDE) to detect reliably is $1-P_{ud}$

In this case

- the conditional probability $P(e|RDE)$ of the event e to cause an error, in case of reliable detection, is 0.0 (perfect decision)

- the conditional probability $P(e|UDE)$ of the event e to cause an error, in case of unreliable detection, is 0.5 (random decision)

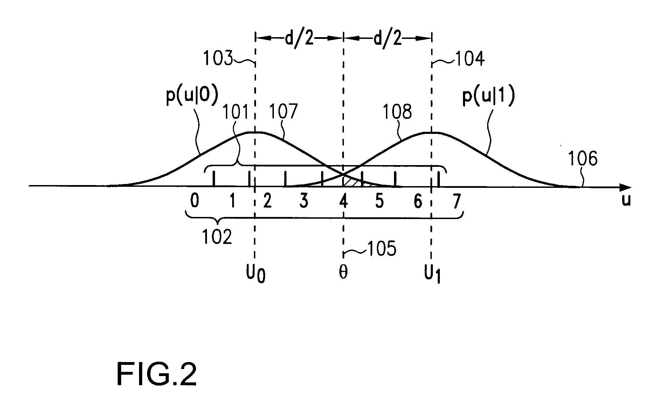

The total probability of error $P(e)$ at the output of R is $P(e) = 0.0\ P_{ud} + 0.5\ P_{ud}$ which provides a linear relation between the probability $P_{ud}$ of an unreliable detection event and the error probability being equivalent to the error rate.
Hence, an observer counting the occurrence of unreliable detections, as declared by R, over a sufficiently period of time, can estimate $P_{ud}$ from the relative frequency of unreliable detection events. By virtue of the relation BER = $0.5\ P_{ud}$, he can then estimate the error rate.
The second scenario is for a binary symbol detector on Additive White Gaussian Noise (AWGN). This case is much easier to model mathematically since it is simpler than a MLSD as addressed in this invention.
The method described there could be generalized as another BER estimation method for symbol detectors. Actually, it is a special case of the general approach to derive an estimate of the error rate from a measurement of the amplitude distribution function. Knowing the amplitude distribution function empirically, model distributions for the conditional distributions for each possible symbol could be fitted, and the BER could then be derived analytically from these distributions. Similar techniques are used in simulation software such as VPItransmissionMaker™, albeit based on full knowledge of the transmitted bit sequence.
Assume a binary random data stream transmitted using binary amplitude modulation over a memory-less channel with AWGN and a bit detector. The a-priori probabilities of sending a one, P(1), and of sending a zero, P(0), are assumed to be identical. Further noise is assumed to be signal-independent, i.e. identical additive noise distribution and hence identical variance $\sigma^2$ for received one and zero. More specifically, let $u_1$ (104) and $u_0$ (103) be the amplitudes of a received one or zero, respectively, in the absence of noise (cf. Fig. 2). Under the above assumptions the conditional probability density function (PDF) of observing amplitude u, conditioned on the event of a sent one or zero, is

$$p(u\,|\,1) = \frac{1}{\sqrt{2\pi\sigma^2}}\exp\!\left(-\frac{(u-u_1)^2}{2\sigma^2}\right) \qquad (1)$$

and

$$p(u\,|\,0) = \frac{1}{\sqrt{2\pi\sigma^2}}\exp\!\left(-\frac{(u-u_0)^2}{2\sigma^2}\right), \qquad (2)$$

respectively (cf. 108, 107, respectively).

The optimum decision threshold is at the amplitude where the two conditional PDFs assume equal values, which is at the threshold $\Theta=(u_1+u_0)/2$ (cf. 105). The graphs of p(u|1) and p(u|0) as well as $\Theta$ are plotted in Fig. 2.

With this decision threshold, the observed probability of bit error $P_b(e)$, alias BER, is known as

$$P_b(e) = \frac{1}{2}\cdot\mathrm{erfc}\!\left(\frac{1}{\sqrt{2}}\cdot\frac{d}{2\sigma}\right) \qquad (3)$$

where d is the distance between $u_1$ and $u_0$, $d=|u_1-u_0|$. With the well-known approximation

$$\mathrm{erfc}(x) = \frac{1}{\sqrt{2\pi}x}\exp\!\left(-x^2\right)$$

(for $x \to \infty$), we can write this as

$$P_b(e) \approx \sqrt{\frac{2}{\pi}}\cdot\frac{\sigma}{d}\cdot\exp\!\left(-\frac{d^2}{8\sigma^2}\right) \qquad (4)$$

On the other hand, unreliable detection occurs when we observe a received amplitude u with approximately equal distance from $u_1$ and $u_0$ is observed, i.e. when $\Theta=u$. In this case $|u-u_1|=|u-u_0|=d/2$ and equation (5) is obtained from equations (1) and (2).

$$p(u=\Theta\,|\,1) = p(u=\Theta\,|\,0) = \frac{1}{\sqrt{2\pi}}\cdot\frac{1}{\sigma}\cdot\exp\!\left(-\frac{(d/2)^2}{2\sigma^2}\right) \qquad (5)$$

In this case, deciding for either one or zero is a strict random decision, i.e. the decision is incorrect with a probability of 0.5.

The probability mass $P_{ud}$ of an unreliable detection event $P(\Theta - \Delta u\,/\,2 \le u \le \Theta + \Delta u\,/\,2)$ is then approximately

$$P_{ud} \approx \Delta u \cdot \left( P(1) \cdot p(u = \Theta \mid 1) + P(0) \cdot p(u = \Theta \mid 0) \right) = \Delta u \cdot \frac{1}{\sqrt{2\pi\sigma^2}} \cdot \exp\left( -\frac{(d/2)^2}{2\sigma^2} \right) \qquad (6)$$

Taking logarithms and choosing $\Delta u = \gamma \cdot d$ as a multiple of d, equations (6) and (7) are obtained:

$$\ln(P_{ud}) = \frac{1}{8} \cdot \left( \frac{d}{\sigma} \right)^2 + \ln\left( \frac{d}{\sigma} \right) + \ln(\gamma) - \ln\left( \sqrt{2\pi} \right) \qquad (6)$$

$$\ln(P_b(e)) \approx \ln(P_{ud}) + \ln(2) - \ln(\gamma) - 2\ln\left( \frac{d}{\sigma} \right) \qquad (7)$$

For large d/σ, the log-probability $\ln(P_{ud})$ is dominated by the term quadratic in d/σ. and $\ln(P_{ud})$ equals $\ln(P_b(e))$ apart from additive constants and apart from the term logarithmic in d/σ which becomes negligible for large d/σ, i. e. for low error rates.

The relationship between logarithmic bit error probability and logarithmic probability of an unreliable detection event is monotonic up to some high BER value, for d/σ > 1. Hence it is invertible in this range. In general, $P_{ud}$ can thus be used to predict $P_b(e)$ approximately provided that γ is known, or it can be mapped via a lookup-table.

For instance, in the context of sampling phase adjustment for a given channel, noise variance $\sigma^2$ may be assumed to be constant, but the distance d between mean values of one and zero will vary, and consequently BER will vary as well. When we assume that an AGC circuit is used, d will remain about constant but the noise $\sigma^2$ will be amplified such that again the "signal-to-noise ratio" $d^2/\sigma^2$ will vary.

For γ=1/8 it can be verified, that $P_b(e)$ in this case provides an upper bound of true

BER in the range of BER from 0 to $3 \cdot 10^{-3}$. This choice of γ corresponds roughly to the case of 3-bit-quantization with automatic gain control. The A/D conversion thresholds for a 3-bit conversion are designated 101 in Fig. 2. The digital values are designated 102.

For practical purposes equation (7) may be simplified to:

$$\ln(P_b(e)) \approx \ln(P_{ud}) + A \qquad (8)$$

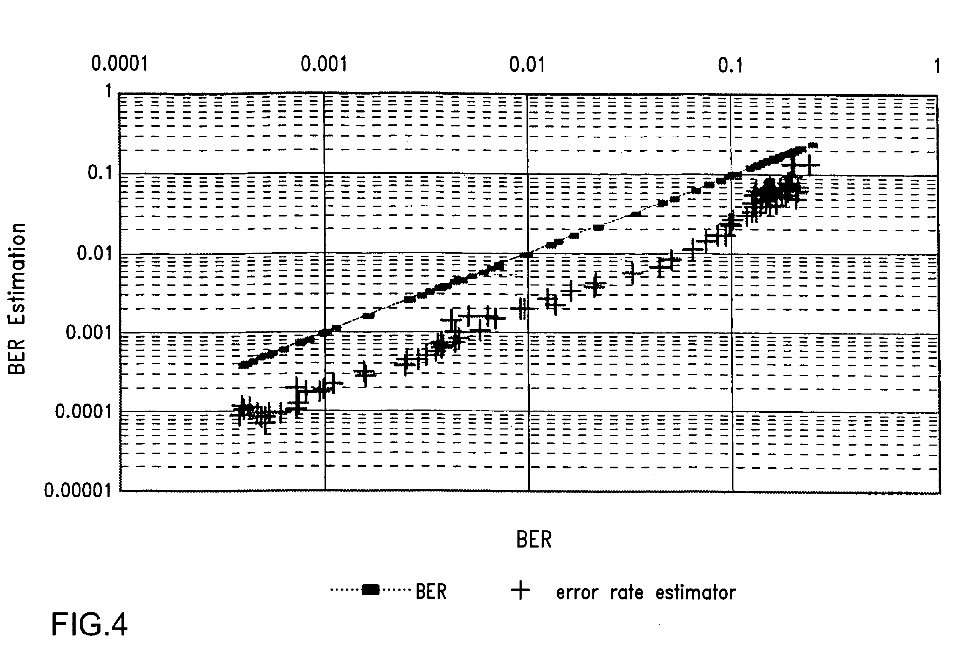

A may be considered to be constant for low error rates. As can be learned from Fig. 4, Equation (8) may be used not only for symbol detectors but also for sequence detectors. In the simulation the results of which are shown in Fig. 4, equation (8) gives a reasonable estimation for the BER in the whole range of the BER from $3 \cdot 10^{-4}$ to $3 \cdot 10^{-1}$. It is to be expected that the value of A would change for a different parameters e.g. SNR. Moreover there might be circumstances in which equation (8) can not be used.

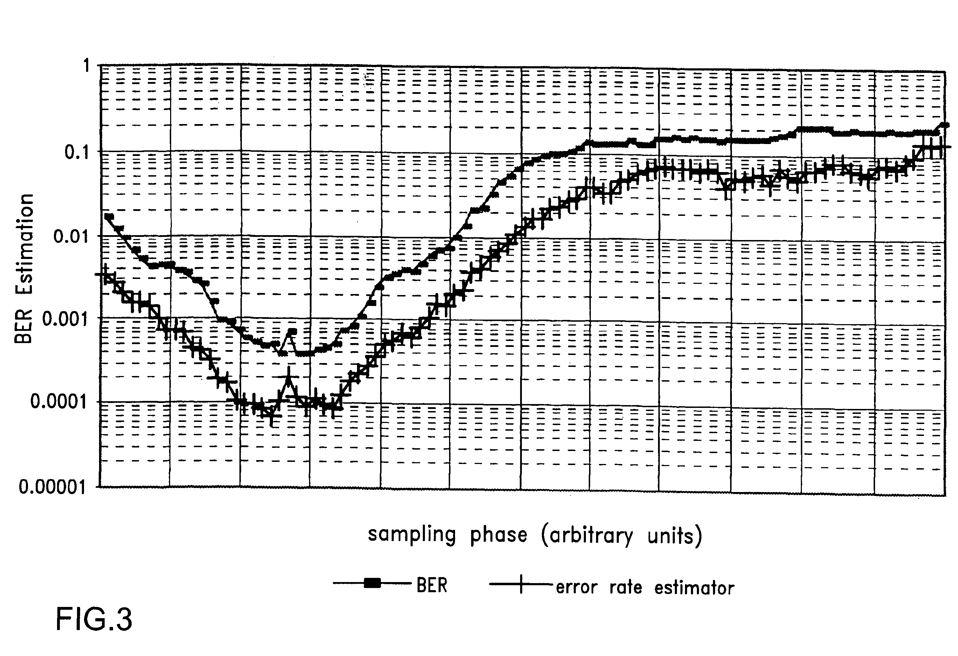

Fig. 3 and 4 show simulation results of a transmission of about one million bits. The sampling phase was changed in an MLSD receiver. Using about $10^6$ bits implies that, in this simulation setup, a BER below $10^{-5}$ cannot estimated meaningfully because the observation interval is too short.

These simulations have been performed for optically amplified links i.e. optical signal-to-noise ratio limited transmission for the case of severe chromatic dispersion, 1st order PMD and significant ISI.

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

**Claims**

1. A method for a receiver comprising:

    receiving a sequence of symbols;

    **characterized in that**
    determining (51, 52, 53) an unreliable detection event at which the absolute value of a difference between a first metric ($m_{is}$) for a first event minus a second metric $m_{ic}$ for a second event is lower than a predetermined threshold.

2. The method of claim 1, **characterized in that** said first metric monotonously depends on the likelihood that a received symbol (u, 106) said sequence of symbols is a first symbol ($u_o$, 103) and said second metric monotonously depends on the likelihood that said received symbol (u, 106) is a second symbol ($u_1$, 104).

3. The method of claim 2, **characterized in that** said first symbol is a logic "0" and said second symbol is a logic "1", said unreliable detection event is determined if said received symbol is within a first range (102); said first range comprising a threshold ($\Theta$, 105) used for discriminating as to whether said received symbol is said first or said second symbol.

4. The method of claim 1, **characterized in that** said sequence of symbols being decoded by a maximum-likelihood-sequence detector (50); said first metric ($m_{is}$) being a path metric associated with the most likely path designated survivor and the second metric ($m_{ic}$) being a metric associated with the second most likely path, designated competitor.

5. The method of one of the claims above, **characterized in that** an unreliable detection event is only determined if a decision is based on said first and second metric and if said decision necessarily leads to at least one bit error if said decision is wrong.

6. The method of claim 4, wherein said maximum-likelihood-sequence detector is a truncation-mode Viterbi detector which enforces a decision after a predetermined number of symbols.

7. The method of claim 4, wherein said maximum-likelihood-sequence detector is a block mode Viterbi detector, wherein the survivor is the finally decided path in a block and the second metric being the metric associated with the second most likely path in said block.

8. The method of one of claims 1 to 7, wherein a first unreliable detection event is defined by a first predetermined threshold (51) for the absolute metric difference and a second unreliable detection event is defined by a second predetermined threshold (52, 53) for the absolute metric difference.

9. The method of one of claims 1 to 8, wherein said first and second metrics are represented by digital values and said first and second metrics are equal (51).

10. The method of one of the preceding claims further comprising:

    counting the unreliable detection events by a counter (54, 55, 56);

    reading the counter value after a first period of time.

11. The method of claim 10, further comprising:

    increasing said first period of time, if said counter value at the end of said first period of time is lower than a first threshold;

    resetting said counter and maintaining said first period of time, if said counter value at the end of said first period of time is greater than said first threshold and smaller than a second threshold; and

    resetting said counter value and decreasing said first period of time, if said counter value at the end of said first period of time is greater than said second threshold.

**12.** The method of claim 11, further comprising:

setting a demodulator parameter (20, 30, 40) depending on the value read from said counter on the basis of a gradient search.

**13.** The method of claim 12, **characterized in that** said demodulator parameter is an amplification (20) within the receiver before an analog-to-digital conversion (40).

**14.** The method of claims 12 or 13, **characterized in that** said demodulator parameter is the sampling phase (30), a quantizer bias (81), a non-linearity parameter (83), an upper cut-off frequency of a low-pass filter (15, 86) a residual chromatic dispersion compensation or a phase association.

**15.** A receiver comprising:

a metric generator (50) for generating a first metric ($m_{is}$) for a first event and a second metric ($m_{ic}$) for a second event,

a unreliability detector (51, 52, 53) for detecting an unreliable detection event when the absolute value of a difference between said first metric minus said second metric is lower than a predetermined threshold.

# FIG.1

FIG.2

FIG.3

EP 1 443 697 A1

FIG.4

EP 1 443 697 A1

EP 1 443 697 A1

**European Patent Office**

## EUROPEAN SEARCH REPORT

Application Number

EP 03 00 2172

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 768 285 A (GRIEP KARL ROBERT ET AL) 16 June 1998 (1998-06-16) * the whole document * | 1-3,5,8, 9,15 | H04L1/20 H04L1/00 |
| X | US 5 878 098 A (SCHAFFNER TERRY M ET AL) 2 March 1999 (1999-03-02) * abstract * * column 2, line 16 - column 3, line 51; figures 1-3 * | 1-3,5,8, 9,15 | |
| A | US 6 215 827 B1 (KADABA SRINIVAS R ET AL) 10 April 2001 (2001-04-10) * abstract * * figure 12 * | 1-15 | |
| | | | TECHNICAL FIELDS SEARCHED (Int.Cl.7) H04L |

The present search report has been drawn up for all claims

| Place of search | Date of completion of the search | Examiner |
|---|---|---|
| THE HAGUE | 15 August 2003 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 03 00 2172

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2003

| Patent document cited in search report | | Publication date | Patent family member(s) | | Publication date |
|---|---|---|---|---|---|
| US 5768285 | A | 16-06-1998 | NONE | | |
| US 5878098 | A | 02-03-1999 | BR | 9702331 A | 20-07-1999 |
| | | | CA | 2229942 C | 04-12-2001 |
| | | | CN | 1196845 A ,B | 21-10-1998 |
| | | | EP | 0846376 A1 | 10-06-1998 |
| | | | JP | 11511939 T | 12-10-1999 |
| | | | WO | 9750191 A1 | 31-12-1997 |
| US 6215827 | B1 | 10-04-2001 | US | 6108374 A | 22-08-2000 |
| | | | AU | 2121799 A | 30-09-1999 |
| | | | BR | 9915302 A | 24-07-2001 |
| | | | CN | 1237074 A | 01-12-1999 |
| | | | EP | 0944201 A2 | 22-09-1999 |
| | | | JP | 11313040 A | 09-11-1999 |
| | | | CA | 2244428 A1 | 24-02-1999 |
| | | | EP | 0899906 A2 | 03-03-1999 |
| | | | JP | 11150571 A | 02-06-1999 |

EPO FORM P0459

For more details about this annex : see Official Journal of the European Patent Office, No. 12/82